# EUROPÄISCHE PATENTANMELDUNG

(11) **EP 4 678 279 A1**
(43) Veröffentlichungstag der Anmeldung: **14.01.2026**
(21) Anmeldenummer: 24187176.3
(22) Anmeldetag: 08.07.2024
(51) Int. Cl.: B01J 8/06, B01J 19/24, F28D 7/16, F28D 21/00

(54) **ROHRBÜNDEL-REAKTOR MIT TEMPERIERMEDIUM-FÜHRENDEM ELEMENT**

(71) Anmelder: Montanuniversität Leoben, 8700 Leoben (AT)
(72) Erfinder: Peham, Martin, 3252 Petzenkirchen (AT); Salbrechter, Katrin, 8700 Leoben (AT); Lehner, Markus, 8793 Trofaiach (AT); Krammer, Andreas, 2340 Mödling (AT)
(74) Vertreter: Dilg, Haeusler, Schindelmann Patentanwaltsgesellschaft mbH

(57) **Zusammenfassung**

Es wird ein Rohrbündel-Reaktor (100) beschrieben, aufweisend:
i) eine Mehrzahl von Rohren (110) die eingerichtet sind zum Durchführen einer chemischen Reaktion;
ii) einen Temperierbereich (120) der eingerichtet ist von einem Temperiermedium durchströmt zu werden, wobei die Mehrzahl von Rohren (110) zumindest teilweise in dem Temperierbereich (120) angeordnet sind; und
iii) ein Temperiermedium-führendes Element (150) das eine Mehrzahl von Öffnungen (151, 152) aufweist;
a) wobei das Temperiermedium-führende Element (150) derart in dem Reaktor (100) angeordnet ist, dass sich die Mehrzahl von Rohren (110) durch die Mehrzahl von Öffnungen (151, 152) erstrecken,
b) wobei jeweils zwischen einem der Rohre (110) und einem Öffnungsrand (153) einer der Öffnungen (151, 152) ein Spalt (140) verbleibt, und
c) wobei der Spalt (140) eingerichtet ist, den Strom des Temperiermediums bezüglich des entsprechenden Rohrs (110) zu führen.

## Beschreibung

### Technisches Gebiet

Die Erfindung bezieht sich auf einen Reaktor mit einer Mehrzahl von Rohren, die zumindest teilweise in einem Temperierbereich angeordnet sind. Die Rohre sind eingerichtet von einem Reaktionsfluid durchströmt zu werden, während der Temperierbereich eingerichtet ist von einem Temperiermedium durchströmt zu werden. Der Reaktor weist ein Temperiermedium-führendes Element, z.B. eine Lochplatte, auf, die derart in dem Reaktor angebracht wird, dass sich die Rohre durch die Öffnungen erstrecken. Zwischen Rohr und Öffnungsrand verbleibt jeweils ein Spalt, welcher derart konfiguriert ist, dass ein Führen/Steuern des Temperiermedium-Stroms ermöglicht ist. Die Erfindung bezieht sich ferner auf ein Verfahren zum Betreiben eines Reaktors und ein Verwenden einer Lochplatte, um den Strom eines Temperiermediums in einem Rohrbündel-Reaktor zu steuern.

Die Erfindung kann sich somit auf das technische Gebiet der Reaktoren, insbesondere Rohrbündel-Reaktoren, beziehen.

### Technischer Hintergrund

Reaktoren zum Durchführen von chemischen Reaktionen sind weit verbreitet; so kann z.B. zum Durchführen einer stark exothermen Reaktionen (z.B. Oxidationsreaktionen) ein Rohrbündel-Reaktor eingesetzt werden. Dabei wird z.B. ein Gasgemisch in Röhren, die von einem Kühlmittel umflossen werden, mithilfe eines Katalysators umgesetzt. Ein konventioneller Aufbau besteht beispielsweise aus einem Kühlmitteltank, durch den sich Katalysator-gefüllte Röhren parallel zueinander erstrecken. Trotz der Temperierung können aber starke Temperaturgradienten auftreten, welche die Performance des Reaktors deutlich beeinträchtigen können.

In einem spezifischen Beispiel wird ein Rohrbündel-Reaktor (Festbett) zur katalytischen Methanisierung von Kohlenstoff-haltigen Gasen mit Wasserstoff zu Methan und Wasser verwendet. Beide Reaktionen sind stark exotherm (es wird Wärme frei) und brauchen einen Katalysator und mindestens 250°C um abzulaufen. Im folgenden Beispiel können aus Kohlenstoff-Monoxid bzw. Kohlenstoff-Dioxid und Wasserstoff Methan (und Wasser) gewonnen werden:

CO + 3 H₂ -> CH₄ + H₂O

CO₂ + 4 H₂ -> CH₄ + 2 H₂O

Ein entsprechender Rohrbündel-Reaktor, beispielsweise mit Thermalöl als Kühlmittel, für katalytische Gasphasenreaktionen wie der Methanisierung, ist an sich bekannt. Allerdings besteht weiterhin das Problem eine homogene Abkühlung zu erzielen. Um die Hot-Spot-Problematik der exothermen Reaktion innerhalb der Katalysatorzone zu bewältigen, wurden spezielle Reaktor-Ausführungen und Einbauten beschrieben; z.B. zusätzliches gasführendes Innenrohr, zwei gekühlte Reaktionszonen, usw.

Konventionelle Einbauten in Rohrbündel-Reaktoren, die durch meanderförmigen Fluss des Kühlmediums eine Erhöhung des mittleren Wärmeübergangskoeffizienten bewirken, haben jedoch den nachteiligen Effekt, dass sie wechselweise radiale und axiale Strömungsprofile sowie Zonen mit höherer Fließgeschwindigkeit und Tot-Zonen aufweisen. Die inhomogene Abkühlcharakteristik entlang der Reaktorachse ist allerdings zur Temperierung von chemischen Reaktionen wie Methanisierungs-Reaktionen nicht geeignet.

Ferner sind für die Temperierung bei der Methanisierungs-Reaktion hohe Kühlmittel (z.B. Öl) Geschwindigkeiten an der Reaktoraußenhülle notwendig, um ausreichend hohe Wärmeübergangskoeffizienten zu erreichen. Eine Erhöhung des Kühlmittel-Flusses, bis die Wärmeübergangskoeffizienten auch ohne Einbauten hoch genug sind, führt aber zu hohen Energieverlusten durch die hohe nötige Kühlmittel-Fördermenge, wegen der hohen nachteiligen Fließgeschwindigkeiten in den Inputstutzen, und in der Folge hohen Druckverlusten.

### Zusammenfassung der Erfindung

Es kann ein Bedarf bestehen einen Reaktor, insbesondere einen Rohrbündel-Reaktor, auf effiziente Weise zu temperieren.

Ein Reaktor, ein Verfahren und ein Verwenden werden im Folgenden beschrieben.

Gemäß einem ersten Aspekt der Erfindung wird ein Reaktor (eine Vorrichtung zum Durchführen einer chemischen Reaktion), insbesondere ein Rohrbündel-Reaktor, beschrieben, wobei der Reaktor aufweist:
i) eine Mehrzahl von Rohren, die eingerichtet sind zum Durchführen (in den Rohren) einer (exothermen oder endothermen) chemischen Reaktion (insbesondere eingerichtet, um von einem Reaktionsfluid (z.B. einem Kohlenstoff-haltigen Gas) durchströmt zu werden und/oder einen Katalysator zum Katalysieren der chemischen Reaktion aufzunehmen), wobei die Mehrzahl von Rohren zumindest teilweise in einem Temperierbereich (z.B. ein Kühlbereich oder ein Erwärm-Bereich) angeordnet ist;
ii) den Temperierbereich (z.B. der Bereich zwischen den Rohren, insbesondere von einer Seitendwand des Reaktors begrenzt; der Temperierbereich kann jener Bereich sein, der von dem Temperiermedium durchströmt wird), der eingerichtet ist von einem Temperiermedium (z.B. Kühlmedium oder Wärmemedium; beispielsweise Thermalöl) durchströmt zu werden, wobei die Mehrzahl von Rohren temperiert wird; und
iii) ein Temperiermedium-führendes Element (z.B. eine Lochplatte, insbesondere als Inlay ausgestaltet) das eine Mehrzahl von Öffnungen (Durchgangslöchern) aufweist.

Das Temperiermedium-führende Element ist derart (in dem Reaktor, insbesondere in dem Temperierbereich) angeordnet, dass sich die Mehrzahl von Rohren durch die Mehrzahl von Öffnungen erstrecken (in anderen Worten erstreckt sich jeweils ein Rohr durch eine Öffnung des Temperiermedium-führenden Elements).

Hierbei verbleibt jeweils zwischen einem Rohr (der Mehrzahl von Rohren) und einem Öffnungsrand (einer Öffnung der Mehrzahl von Öffnungen) ein Spalt.

Der Spalt ist insbesondere derart eingerichtet, den Strom/Fluss (bzw. das Durchströmen) des Temperiermediums (bezüglich des entsprechenden Rohrs) zu führen (insbesondere zu steuern bzw. zu variieren).

Gemäß einem zweiten Aspekt der Erfindung wird ein Verfahren zum Betreiben eines Reaktors beschrieben, das Verfahren aufweisend:
i) optional Durchführen einer (insbesondere exothermen oder endothermen) chemischen Reaktion in einer Mehrzahl von Rohren;
ii) Strömen eines Temperiermediums durch einen Temperierbereich, wobei die Rohre zumindest teilweise in dem Temperierbereich angeordnet sind, und hierbei Temperieren der Rohre;
iii) Einsetzen eines Temperiermedium-führenden Elements, das eine Mehrzahl von Öffnungen aufweist, so dass sich die Rohre durch die Öffnungen erstrecken, wobei jeweils zwischen einem der Rohre und einem (Öffnungs-) Rand einer der Öffnungen ein Spalt verbleibt; und
iv) Führen (Anpassen/Steuern), mittels des Spalts, des Temperiermedium-Stroms, bezüglich des entsprechenden Rohrs, insbesondere Steuern der Strömungs-/Fließgeschwindigkeit.

Gemäß einem dritten Aspekt der Erfindung wird ein Verwenden beschrieben einer Lochplatte, um den Strom eines Temperiermediums in einem Rohrbündel-Reaktor zu führen/steuern, wobei sich die Rohre des Reaktors derart durch die Öffnungen der Lochplatte erstrecken, dass jeweils ein Spalt zwischen einem Rohr und dem Öffnungsrand der entsprechenden Öffnung verbleibt.

Im Kontext dieses Dokuments kann der Begriff "Temperiermedium-führendes Element" insbesondere jegliche gegenständliche Vorrichtung bezeichnen, welche geeignet ist, den Fluss eines Temperiermediums (z.B. Öl) derart zu beeinflussen, dass der Temperiermedium-Strom/Fluss in eine bestimmte Richtung und/oder auf bestimmte Weise geführt wird. In einem bevorzugten Beispiel weist das Temperiermedium-führende Element eine Öffnung auf, welche dann die Strömungsrichtung des Temperiermediums beeinflusst. Weiter bevorzugt wird die Öffnung über ein Rohr geschoben, so dass ein Spalt zwischen Temperiermedium-führendem Element (Öffnungsrand) und Rohr verbleibt.

Die Öffnung kann hierbei rund, eckig oder anderweitig geformt sein, wobei es vorteilhaft sein kann, wenn die Geometrie der Öffnung an die Geometrie des Rohrs angepasst ist. Die erwünschte Temperiermedium-führende Wirkung kann insbesondere durch den Spalt hervorgerufen werden, wodurch anstelle eines inhomogenen Temperiermedium-Flusses (um die Rohre) ein gleichmäßig verteilter, insbesondere homogener, Fluss/Strom bereitgestellt werden kann. Das Temperiermedium-führende Element kann als Deckel ausgebildet sein, welcher einen ersten Temperierbereich von einem zweiten Temperierbereich abtrennt. Bevorzugt kann das Temperiermedium-führende Element als Inlay/Insert ausgestaltet sein und flexibel eingesetzt werden. Der Spalt (insbesondere Ringspalt) zwischen Öffnungsrand und Rohr kann für den Temperiermedium-Strom als "Düse" wirken.

Im Kontext dieses Dokuments kann der Begriff "Temperiermedium-Strom" insbesondere ein Temperiermedium bezeichnen, das durch einen Temperierbereich eines Reaktors strömt. Alternativ kann von Temperiermedium-Fluss gesprochen werden. Beispielsweise kann ein Temperiermedium von einem Temperiermedium-Einlass durch den Temperierbereich mit den Rohren zu einem Temperiermedium-Auslass geströmt (bzw. geführt) werden. Ein solcher Temperiermedium-Strom kann eine bestimmte Strömungsgeschwindigkeit (bzw. Fluss-/Fließgeschwindigkeit) aufweisen. Beim Durchströmen eines Spaltes zwischen einem Rohr und einem Temperiermedium-führenden Element kann der Temperiermedium-Strom von der Geometrie/Dimensionierung, z.B. Breite (und Länge), des Spalts beeinflusst werden. Dadurch kann sich eine Vielzahl von Möglichkeiten ergeben den Temperiermedium-Strom zu variieren, insbesondere zu steuern.

Gemäß einem exemplarischen Ausführungsbeispiel kann die Erfindung auf der Idee basieren, dass ein Reaktor, insbesondere ein Rohrbündel-Reaktor, auf effiziente Weise temperiert werden kann, wenn ein Temperiermedium-führendes Element derart eingesetzt wird, dass sich die Rohre durch Öffnungen des Temperiermedium-führenden Elements erstrecken, wobei aber jeweils ein Spalt zwischen Rohr und Öffnungsrand verbleibt. Dieser Spalt wird bevorzugt derart ausgestaltet, dass der Temperiermedium-Strom auf eine erwünschte Weise entlang dem Rohr geführt wird. Überraschenderweise kann mittels dieser einfachen Maßnahme eine effiziente und homogene Temperierung (Temperierung oder Erwärmen/Erhitzen), insbesondere entlang der Rohre, ermöglicht werden.

Der erfindungsgemäße Rohrbündel-Reaktor kann ausgestaltet sein, um eine ausreichende Temperierung in einem erprobten und leicht skalierbaren Rohrbündelreaktor zu realisieren. Dabei werden keine aufwendigen Einbauten verwendet, sondern z.B. Lochplatten Inlays. Diese Öffnungen in den Temperiermedium-führenden Elementen können konzentrisch um die Reaktorrohre angeordnet werden und z.B. über die gesamte gekühlte Reaktorlänge (im Temperierbereich) gestapelt werden.

In einem Ausführungsbeispiel leitet ein Paket (Stapel, Block) aus Temperiermedium-führenden Elementen den Fluss des Temperiermediums zur Temperierung der einzelnen Reaktorrohre durch einen (Ring-) Spalt um jedes einzelne Reaktorrohr herum. Durch die Wahl der Spalt-dicke/breite kann, analog zum einzelnen Doppelrohrreaktor, die Temperiermedium-Fließgeschwindigkeit bei gegebenem Durchfluss variiert werden. Diese Temperiermedium-Fließgeschwindigkeit kann ein entscheidender Parameter für die Kühlcharakteristik sein und damit für die Performance des Reaktors. Auf diese Weise kann auch der notwendige Temperiermedium-Fluss gegenüber konventionellen Lösungen verringert werden.

Ein wesentlicher Vorteil des beschriebenen Gegenstands gegenüber konventionellen Lösungen kann in der Möglichkeit gesehen werden, dass das für die Funktion des Prozesses ausschlaggebende Temperaturprofil mit einer einfacheren und günstigeren Bauweise erreicht werden kann.

In einem Ausführungsbeispiel kann die Temperier-Intensität (z.B. Kühlintensität) eines temperierten Rohrbündel-Reaktors mittels Temperiermedium-führender Elemente eingestellt werden. Die Temperiermedium-führenden Elemente können einen definierten konzentrischen Ringquerschnitt um die Reaktorrohre herum gewährleisten, durch den das Temperiermedium fließt. Durch die Wahl der Spaltbreite kann der Strömungsquerschnitt und damit die Temperier-Intensität beeinflusst werden. Bei konstantem Volumenstrom des Temperiermediums führt eine Verringerung der Spaltbreite zu einem kleineren Strömungsquerschnitt und damit zu einer größeren Fließgeschwindigkeit bzw. vice versa. Dabei kann über die Höhe der Reaktorrohre die Spaltbreite unterschiedlich eingestellt werden und so entsprechend z.B. der axialen variierenden Wärmefreisetzung einer exothermen Reaktion die Wärmeabfuhr über das Reaktorrohr vorteilhaft angepasst werden.

Eine größere Fließgeschwindigkeit kann zu höheren Turbulenzen führen, die auch als dimensionslose Reynoldszahl ausgedrückt werden kann. Eine höhere Reynoldszahl kann zu höheren Nusseltzahlen führen, und damit zu einem höheren Wärmeübergangskoeffizienten an der Schnittstelle zwischen Temperiermedium und Reaktorwand. Andererseits führt eine höhere Reynoldszahl, bzw. Turbulenz im Temperiermedium, auch zu einem höheren Druckverlust und damit höheren Energiebedarf einer Temperiermedium-Pumpe. Daher kann durch die Wahl der richtigen Spaltbreiten ein Optimum im Zielkonflikt zwischen gutem Wärmeübergang von Rohr/Reaktorwand auf Temperiermedium und niedrigem Druckverlust (bei konstantem Volumenstrom) angestrebt werden.

### Exemplarische Ausführunasbeispiele

Gemäß einem Ausführungsbeispiel ist der Spalt derart eingerichtet, dass der Temperiermedium-Strom eine homogene Temperierung (entlang von einem oder mehr Rohren) ermöglicht. Die homogene Temperierung kann sich hierbei auf einen lokalen Bereich des Rohrs beziehen, das sich durch die entsprechende Öffnung erstreckt. Werden eine Mehrzahl von Temperiermedium-führenden Elementen (als Stapel) übereinander oder ein einstückiger Temperiermedium-führendes Element Block eingesetzt, so kann sich die homogene Temperierung auch entlang dieses Rohrs erstrecken und (im Wesentlichen) das gesamte Rohr homogen temperieren. Werden eine Mehrzahl von Rohren (und Mehrzahl von Spalten) betrachtet, so kann die homogene Temperierung auch für die Mehrzahl von Rohren bzw. den Temperierbereich angenommen werden.

Gemäß einem Ausführungsbeispiel ist eine homogene Abkühlcharakteristik bzw. Erwärm-Charakteristik entlang der Reaktorachse ermöglicht. Dadurch kann eine besonders effiziente Temperierung auf einfache Weise ermöglicht werden. Insbesondere bei Vorsehen einer Mehrzahl von Spalten entlang der Reaktorachse kann ein besonders effizientes Steuern des Temperiermedium-Stroms gelingen. Unterschiedliche Spaltenbreiten (ermöglicht durch unterschiedliche Öffnungsdurchmesser) können lokale Variationen (des Temperiermediums-Stroms) ermöglichen und damit lokale thermische Unterschiede ausgleichen. Im Ergebnis kann dann eine homogene Temperaturverteilung/Abkühlung ermöglicht werden.

Gemäß einem Ausführungsbeispiel ist der Spalt eingerichtet, die Fließgeschwindigkeit des Temperiermedium-Stroms zu variieren, insbesondere zu steuern. Der Spalt kann derart ausgestaltet sein, dass eine bestimmte Menge des Temperiermedium-Stroms in einer bestimmten Zeit hindurch strömt.

Entsprechend kann auch die Fließgeschwindigkeit bzw. die Strömungsgeschwindigkeit des Temperiermediums variiert bzw. gezielt gesteuert werden. Diese Steuerung wird bevorzugt so konfiguriert, dass eine homogene Temperierung (z.B. Abkühlcharakteristik) bereitgestellt werden kann.

Mit einer Mehrzahl von Temperiermedium-führenden Elementen kann gewährleistet sein, dass über die gesamte Länge des Reaktors eine gleichmäßige Temperier-Rate (z.B. Abkühlrate) an der Außenseite herrscht, was entscheidend für die Funktionsfähigkeit des Reaktors sein kann. Außerdem kann damit die nötige Temperiermedium-Fördermenge verringert und/oder die Energieeffizienz erhöht werden.

Gemäß einem Ausführungsbeispiel ist die Haupterstreckungsrichtung (X, Y) des Temperiermedium-führenden Elements senkrecht zu der Haupterstreckungsrichtung (Z) der Mehrzahl von Rohren angeordnet. Der Begriff "Haupterstreckungsrichtung" kann sich in diesem Zusammenhang auf eine oder mehr Vorzugsrichtung(en) beziehen, die deutlich länger sind als eine weitere Erstreckungsrichtung. Wird ein Temperiermedium-führenden Element z.B. als (zylindrische) Lochplatte ausgestaltet, so weist diese Haupterstreckungsrichtungen in der X-Y Ebene auf, während die Erstreckung in der Z-Ebene keine Haupterstreckungsrichtung darstellt. Die Haupterstreckungsrichtung des Reaktors kann sich an der Haupterstreckungsrichtung der Rohre orientieren; im vorliegenden Kontext wird von Reaktorachse A gesprochen. Bei einer solchen senkrechten Orientierung von Rohren zu Temperiermedium-führendem Element zueinander, können die Rohre in praktischer und stabiler Weise durch die Öffnungen des Temperiermedium-führenden Elements geschoben werden.

Gemäß einem Ausführungsbeispiel weist der Reaktor, insbesondere der Temperierbereich, eine Seitenwand auf. Diese Seitenwand kann parallel zu der Reaktorachse orientiert sein. Gemäß einem Ausführungsbeispiel erstreckt sich das Temperiermedium-führende Element bis zu der Seitenwand, insbesondere schließt an der Seitenwand ab. Dies kann den Vorteil haben, dass ein besonders effizienter Temperiermedium-Strom ermöglicht ist, denn der Temperiermedium-Strom wird nur entlang der Rohre und nicht zusätzlich entlang der Seitenwände geführt. In dieser Ausführung kann das Temperiermedium-führende Element als Trennwand wirken, das den Temperiermedium-Strom von einem Strömen entlang der Seitenwände abhält.

Gemäß einem Ausführungsbeispiel ist das Temperiermedium-führende Element als Inlay (Insert) ausgebildet, insbesondere separat von den Rohren hergestellt. Dies kann den Vorteil haben, dass das Temperiermedium-führende Element (im Wesentlichen) unabhängig von dem Reaktor und den Rohren ist. Dadurch kann das Temperiermedium-führende Element flexibel und je nach Bedarf eingesetzt (und auch wieder entfernt) werden, auch in bereits bestehende Reaktoren.

Gemäß einem Ausführungsbeispiel ist das Temperiermedium-führende Element als Lochplatte ausgebildet, insbesondere als Lochplatten-Inlay. Dies kann den Vorteil haben, dass eine einfach herstellbare und flexibel einsetzbare Implementierung bereitgestellt ist. Die Platte kann auf einfache Weise in den Reaktor eingesetzt und auch wieder aus diesem entfernt werden.

Gemäß einem Ausführungsbeispiel ist das Temperiermedium-führende Element zylinderförmig ausgebildet, insbesondere als kreisförmige Platte. Hierdurch kann das Temperiermedium-führende Element beispielsweise an eine Reaktor-Form angepasst sein, insbesondere direkt an Seitenwände angrenzen.

Gemäß einem Ausführungsbeispiel weist das Temperiermedium-führende Element ein oder mehr Segmente auf. Während das Temperiermedium-führende Element in einem Beispiel einstückig ausgeführt ist, können aber auch zwei oder mehr Stücke (Segmente) verwendet werden, um das Element zusammenzusetzen.

Gemäß einem Ausführungsbeispiel ist die Breite des Spalts 0,5 mm oder mehr, insbesondere 1 mm oder mehr, weiter insbesondere 5 mm oder mehr, weiter insbesondere 10 mm oder mehr. Gemäß einem Ausführungsbeispiel kann die Spaltbreite in dem Bereich 0,5 mm bis 10 mm sein. Abhängig von der gewünschten Anwendung kann die optimale Spaltbreite ausgewählt werden.

Gemäß einem Ausführungsbeispiel weist das Temperiermedium-führende Element einen Durchmesser von 200 mm oder mehr, insbesondere 1 m oder mehr, weiter insbesondere 2 m oder mehr, auf. In einem Beispiel kann der Durchmesser in dem Bereich 200 mm bis 4 m liegen.

Gemäß einem Ausführungsbeispiel weist das Temperiermedium-führende Element eine Höhe von 2 mm oder mehr, insbesondere 10 mm oder mehr, weiter insbesondere 50 mm oder mehr, auf. In einem Beispiel kann die Höhe in dem Bereich 2 mm bis 50 mm sein.

Gemäß einem Ausführungsbeispiel ist der Durchmesser einer Öffnung 11 mm oder mehr, insbesondere 20 mm oder mehr, weiter insbesondere 50 mm oder mehr. In einem Beispiel liegt der Öffnungsdurchmesser in dem Bereich 11 mm bis 70 mm. Gemäß einem Ausführungsbeispiel kann die Anzahl der Öffnungen der Anzahl der Rohre entsprechen.

Gemäß einem Ausführungsbeispiel weist das Temperiermedium-führende Element zumindest eines der folgenden Materialien aufweist: Metall, insbesondere Stahl, Aluminium (-legierungen), eine Legierung, ein Buntmetall, Keramik, Kunststoff. In einem Beispiel kann ein beständiges, mechanisch/thermisch stabiles Material bevorzugt sein. Beispielsweise ist Aluminium beständig, thermisch stabil, und gut zu bearbeiten.

Gemäß einem Ausführungsbeispiel ist der Durchmesser der Öffnung senkrecht zu der Haupterstreckungsrichtung des Temperiermedium-führenden Elements variabel oder konstant. Die Öffnung kann einen durchgängig konstanten Durchmesser aufweisen oder dieser Durchmesser kann variieren; z.B. zwei oder mehr Zonen mit unterschiedlichem Durchmesser. Eine Änderung in dem Durchmesser kann stufenlos (schräg) oder in Stufen erfolgen.

Gemäß einem Ausführungsbeispiel ist der Durchmesser der Öffnung senkrecht zu der Haupterstreckungsrichtung des Temperiermedium-führenden Elements verjüngend, insbesondere konisch, ausgebildet. Eine konische Öffnung kann zugleich einen sich kontinuierlich verjüngenden Durchmesser bereitstellen als auch einfach (mittels Bohrung) herstellbar sein.

Gemäß einem Ausführungsbeispiel weist der Reaktor auf: ein weiteres Temperiermedium-führendes Element. Gemäß einem Ausführungsbeispiel sind das Temperiermedium-führende Element und das weitere Temperiermedium-führende Element aneinander angrenzend, insbesondere aneinander befestigt. Gemäß einem Ausführungsbeispiel sind das Temperiermedium-führende Element und das weitere Temperiermedium-führende Element parallel zueinander, insbesondere bezüglich der Haupterstreckungsrichtungen, angeordnet. In einem bevorzugten Ausführungsbeispiel weist der Reaktor eine Mehrzahl von Temperiermedium-führenden Elementen auf, insbesondere parallel zueinander entlang der Reaktorachse. Dies kann den Vorteil haben, dass der Temperiermedium-Strom über einen größeren Bereich des Temperierbereichs geführt werden kann.

Gemäß einem Ausführungsbeispiel weist das Temperiermedium-führende Element einen ersten Öffnungsdurchmesser auf und das weitere Temperiermedium-führende Element weist einen zweiten Öffnungsdurchmesser auf. Hierbei kann sich der erste Öffnungsdurchmesser von dem zweiten Öffnungsdurchmesser unterscheiden, z.B. größer oder kleiner sein. Dadurch kann eine flexible einsetzbare Temperierung entlang der Rohre stattfinden, wobei lokale Variationen (des notwendigen Wärmeaustauschs) ausgeglichen werden können.

Insbesondere im Falle einer (stark) exothermen Reaktion (wie Methanisierung) kann es vorkommen, dass ein Reaktor keinen über die Reaktorhöhe konstanten Kühlbedarf, sondern einen variierenden Kühlbedarf hat. Es kann stattdessen, abhängig von Fluidart, Fluiddurchfluss und Reaktordruck, Bereiche geben, in denen intensivere Temperierung notwendig ist, und Bereiche, in denen weniger intensive Temperierung notwendig ist. Entsprechend können ausgeprägte axiale Temperaturprofile im Reaktorinneren vorliegen. Durch die Variation der Spaltbreite, insbesondere über die Reaktorhöhe, kann aber die Intensität der Temperierung an den Kühlbedarf angepasst werden.

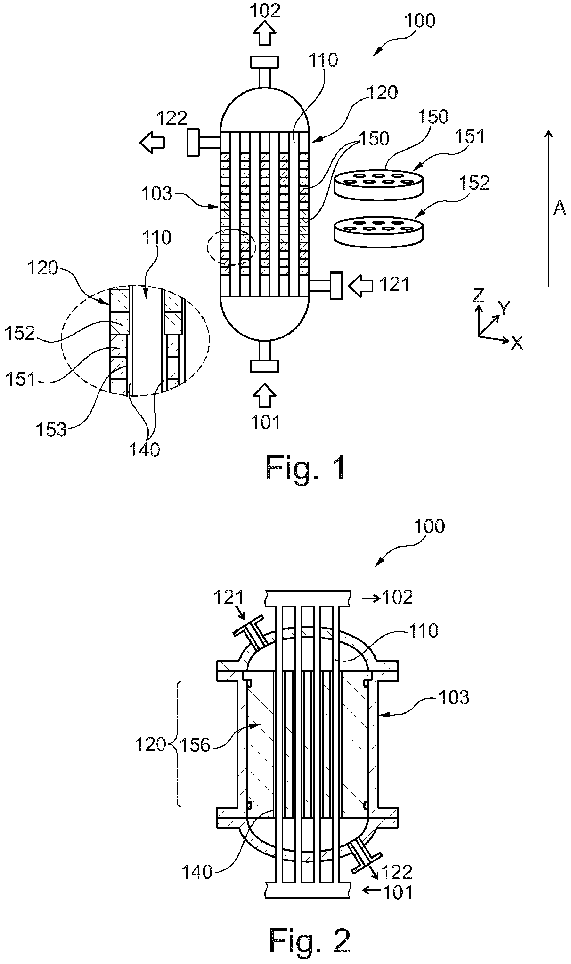

Gemäß einem Ausführungsbeispiel weist der Reaktor auf: eine Mehrzahl an Temperiermedium-führenden Elementen, insbesondere aneinander befestigt, die als Stapel ausgebildet ist. Wie in Figur 1 dargestellt, können eine Mehrzahl von Temperiermedium-führenden Elementen übereinander angeordnet werden, i.e. als Stapel. Auf diese Weise kann ein größerer Bereich mit geführtem Temperiermedium-Strom in dem Temperierbereich auf einfach zu implementierende Weise umgesetzt werden. Weiterhin kann dieser Ansatz sehr flexibel sein, denn die Mehrzahl von Temperiermedium-führenden Elementen können je nach Bedarf in Anzahl und Eigenschaften (z.B. Öffnungsbreite) variiert und kombiniert werden.

Gemäß einem Ausführungsbeispiel weist der Reaktor auf: einen einstückigen Temperiermedium-führendes Element Block. Im Gegensatz zu dem oben beschriebenen Stapel kann auch ein Temperiermedium-führendes Element von besonderer Höhe vorgesehen werden. Die Höhe dieses Blocks kann mit jener des Stapels vergleichbar sein (siehe z.B. Figur 2). Diese Ausgestaltung kann eine kompakte und robuste Bauweise ermöglichen. Zudem kann Herstellungsaufwand eingespart werden, denn letztlich wird nur ein Temperiermedium-führendes Element eingelegt werden. Trotz der einstückigen Bauweise können die Öffnungen aber auch über ihre Länge hinweg mit variablem Durchmesser bereitgestellt werden.

Gemäß einem Ausführungsbeispiel erstreckt sich der Stapel von Temperiermedium-führenden Elementen oder der einstückige Temperiermedium-führendes Element Block über ein Viertel oder mehr, insbesondere die Hälfte oder mehr, entlang der Reaktorachse. In einem Beispiel kann die Erstreckung im Bereich 50 bis 90 % liegen. Dies kann sich sowohl auf einen Querschnitt (2D) als auch das Volumen (3D) des Temperierbereichs beziehen. Der Vorteil dieser Ausgestaltung kann darin liegen, (fast) den gesamten Temperiermedium-Strom zu führen bzw. zu steuern, um eine besonders effiziente Temperier-Charakteristik bereitzustellen.

Gemäß einem Ausführungsbeispiel ist zumindest einem von dem Temperiermedium-führenden Element, dem Stapel von Temperiermedium-führenden Elementen, dem einstückigen Temperiermedium-führendes Element Block, zylinderförmig ausgebildet. Bevorzugt kann ein Reaktor einen runden Querschnitt aufweisen. Zylinder-förmige Temperiermedium-führende Elemente können somit direkt passend eingesetzt/eingeschoben werden; dies insbesondere mit Kontakt zu den Reaktor-Seitenwänden. In einem weiteren Ausführungsbeispiel kann der Reaktor aber auch einen eckigen Querschnitt aufweisen. In diesem Fall können die Temperiermedium-führenden Elemente ebenfalls eckig oder zylinderförmig ausgestaltet sein.

Gemäß einem Ausführungsbeispiel sind die Rohre parallel zueinander angeordnet. Gemäß einem Ausführungsbeispiel ist die Anzahl der Rohre in dem Reaktor in dem Bereich 3 bis 500 Rohre, weiter insbesondere in dem Bereich 5 bis 200 Rohre.

Gemäß einem Ausführungsbeispiel sind die Rohre eingerichtet zum Durchführen einer katalytischen Reaktion, insbesondere Methanisierung. Gemäß einem Ausführungsbeispiel sind die Rohre ausgebildet zum Aufnehmen eines (Metall) Katalysators (z.B. Nickel auf Aluminiumoxid), insbesondere zum Durchführen einer katalytischen Gasphasenreaktion.

Gemäß einem Ausführungsbeispiel ist der Reaktor eingerichtet zum Bereitstellen einer Temperatur von 250°C oder mehr, insbesondere 500°C oder mehr, weiter insbesondere 700°C oder mehr.

Gemäß einem Ausführungsbeispiel ist der Reaktor eingerichtet zum Bereitstellen eines Drucks von 2 bar oder mehr, insbesondere 5 bar oder mehr, weiter insbesondere 10 bar oder mehr, weiter insbesondere 25 bar oder mehr. In einem Beispiel stellt der Reaktor einen Druck in dem Bereich 2 bar bis 80 bar bereit.

Gemäß einem Ausführungsbeispiel beträgt ein Außendurchmesser der Rohre 10 bis 50 mm. Gemäß einem Ausführungsbeispiel beträgt ein Innendurchmesser der Rohre 8 bis 45 mm. Gemäß einem Ausführungsbeispiel ist die Wandstärke der Rohre in dem Bereich 1,5 mm bis 3 mm.

Gemäß einem Ausführungsbeispiel ist der Reaktor eingerichtet, so dass das Reaktionsfluid den Reaktor von unten nach oben oder von oben nach unten durchströmt. Gemäß einem Ausführungsbeispiel ist der Reaktor eingerichtet, dass das Reaktionsfluid ein Kohlenstoff-haltiges Gas und/oder Wasserstoff aufweist. Gemäß einem Ausführungsbeispiel ist der Reaktor eingerichtet, dass das Temperiermedium ein Öl, insbesondere Thermalöl, weiter insbesondere Mineralöl oder Synthetiköl, aufweist. Gemäß einem Ausführungsbeispiel ist der Reaktor als Festbettreaktor ausgebildet. Gemäß einem Ausführungsbeispiel weisen die Rohre ein Metall, insbesondere Stahl, insbesondere Edelstahl, auf.

Gemäß einem Ausführungsbeispiel weist der Reaktor das Temperiermedium in dem Temperierbereich auf. Gemäß einem Ausführungsbeispiel weist das Temperiermedium ein Öl, insbesondere Thermalöl, weiter insbesondere Mineralöl oder Synthetiköl, auf.

In einem weiteren Ausführungsbeispiel (insbesondere bei Temperaturen über 350⁰) kann eine Salzschmelze verwendet werden. Gemäß einem Ausführungsbeispiel ist der Wärmeübergangskoeffizient des Temperiermediums in dem Bereich 100 W/m²K bis 25000 W/m²K.

Gemäß einem Ausführungsbeispiel weist der Reaktor (entlang der Reaktorachse) eine Länge von 0,5 m oder mehr, insbesondere 5 m oder mehr, auf. In einem Beispiel liegt die Länge in dem Bereich 0,5 m bis 10 m.

Gemäß einem weiteren Ausführungsbeispiel ist das Temperiermedium-führende Element (im Wesentlichen) planar ausgebildet. Insbesondere ist das Temperiermedium-führende Element als Deckel ausgebildet. Eine Öffnung in dem Temperiermedium-führenden Element kann z.B. durch (kostengünstige Verfahren wie) Lasern, Stanzen, Ätzen, Bohren, oder Schneiden erzeugt werden. Ferner kann das Temperiermedium-führende Element auch z.B. mittels Spritzgießen oder 3D-Druck hergestellt werden.

Gemäß einem weiteren Ausführungsbeispiel sind die Öffnung und der Spalt hinsichtlich ihrer flächigen Geometrie vergleichbar, insbesondere im Wesentlichen gleich. Beispielsweise können Öffnung und Rohr eine runde Form oder eine eckige Form aufweisen. Auch weitere geometrische Formen sind denkbar.

Gemäß einem weiteren Ausführungsbeispiel des Verfahrens tritt der Temperiermedium-Strom aus dem Spalt rotationssymmetrisch, insbesondere im Wesentlichen homogen verteilt, aus. Diese Strömung kann besonders effizient das Rohr gleichmäßig umströmen und temperieren.

Gemäß einem Ausführungsbeispiel kann es Ziel einer Reaktorauslegung sein, durch die Dimensionierung der Einflussgrößen eine effiziente Reaktorperformance durch bestmögliche Temperierung bei gleichzeitiger Minimierung des Aufwands zur Beförderung des Temperiermediums (möglichst kleiner Volumenstrom und Druckverlust) zu erreichen. Diese Optimierung kann mit dem beschriebenen Gegenstand technisch durchgeführt werden.

Gemäß einem Ausführungsbeispiel kann ein Reaktor verwendet werden, in welchem eine exotherme Reaktion stattfindet und daher eine Kühlung von außen zur Abfuhr der Reaktionswärme notwendig ist. Das beschriebene Prinzip kann aber auch anwendbar sein auf einen Reaktor, in welchem eine endotherme Reaktion stattfindet und das außen strömende Medium zum Heizen benutzt wird. Auch solche Reaktionen haben ein axiales Temperaturprofil im Reaktionsrohr und benötigen daher eine über die Höhe des Reaktionsrohres angepasste (und auf die jeweilige Reaktion angepasste) Heizung/Wärmezufuhr von außen.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt einen Rohrbündel-Reaktor gemäß einem exemplarischen Ausführungsbeispiel der Erfindung.
Figur 2 zeigt einen Rohrbündel-Reaktor gemäß einem weiteren exemplarischen Ausführungsbeispiel der Erfindung.

### Detaillierte Beschreibung der Zeichnungen

Die Darstellungen in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

**Figur 1** zeigt einen Rohrbündel-Reaktor 100 gemäß einem exemplarischen Ausführungsbeispiel der Erfindung. Der Reaktor 100 weist eine Mehrzahl von Rohren 110 auf, die parallel zueinander angeordnet sind. Schematisch sind vier Rohre 110 gezeigt, es können aber auch z.B. mehrere hundert Rohre 110 sein. Die Rohre 110 sind (im Wesentlichen) baugleich ausgestaltet und erstrecken sich entlang der Reaktorachse A, bzw. in der Haupterstreckungsrichtung (hier in der vertikalen Richtung Z) des Reaktors 100. Der Reaktor 100 ist eingerichtet zum Durchführen einer exothermen chemischen Reaktion, in einem bevorzugten Ausführungsbeispiel einer Methanisierung. Zu diesem Zweck sind die Rohre 110 jeweils mit einem (Metall) Katalysator gefüllt, beispielsweise Nickel auf Aluminiumoxid und/oder Zinkoxid.

Der Reaktor 100 weist einen Einlass 101 an der Unterseite auf und einen Auslass 102 an der Oberseite. Auf diese Weise kann ein Reaktionsfluid (Edukt) von unten durch den Reaktor 100 (bzw. durch die Rohre 110) strömen und oben kann das Reaktionsprodukt aus einem Auslass 102 austreten. In einem bevorzugten Beispiel kann ein Kohlenstoff-haltiges Gas wie Kohlenstoff-Monoxid und/oder - Dioxid und Wasserstoff-Gas als Reaktionsfluid über den Einlass 101 eingeströmt werden. Diese Reaktionsedukte werden mittels des Katalysators in den Rohren 110 z.B. zu den Reaktionsprodukten Methan und Wasser reagieren, welche dann über den Auslass 102 gewonnen werden können. Um die chemische Reaktion ablaufen zu lassen werden bestimmte Temperatur- und Druckbedingungen im Reaktor 100 vorgesehen, insbesondere eine Temperatur von 250⁰C oder mehr und ein Druck von 2 bar oder mehr.

Diese Reaktion ist jedoch stark exotherm, so dass eine zuverlässige Temperierung bereitgestellt werden muss. Ein Vorzug des Rohrbündel-Reaktors 100 kann darin gesehen werden, dass die Reaktion über die Mehrzahl von Rohren verteilt wird. Dadurch werden viele Oberflächen bereitgestellt, die ein effizientes Temperieren erlauben können (in anderen Worten: jedes Rohr wird gekühlt). Für diesen Zweck ist ein Temperierbereich 120 vorgesehen, welcher in diesem Beispiel über drei Viertel des Reaktors 100 (bezüglich Volumen) einnimmt. Der Temperierbereich 120 wird von den Seitenwänden 103 des Reaktors 100 begrenzt und umfasst den Bereich zwischen den Rohren 110, durch den ein Temperiermedium geströmt werden kann. Als Temperiermedium kann z.B. ein Öl, wie ein Thermalöl, verwendet werden. Im gezeigten Beispiel strömt das Temperiermedium durch den Temperiermedium-Einlass 121 durch den Temperierbereich 120 (in dem die Rohre 110 angeordnet sind) und wird durch einen Temperiermedium-Auslass 122 wieder ausgeströmt.

Im Gegensatz zu konventionellen Reaktoren weist ein erfindungsgemäßer Rohrbündel-Reaktor 100 eine Mehrzahl von Temperiermedium-führenden Elementen 150 auf. Wie aus Figur 1 ersichtlich kann ein solches Temperiermedium-führendes Element 150 in praktischer Weise als ein Lochplatten-Inlay/Insert ausgebildet sein. Das Temperiermedium-führende Elemente 150 weist eine Mehrzahl von Öffnungen 151, 152 auf, wobei aus Figur 1 ersichtlich ist, dass Temperiermedium-führende Elemente mit unterschiedlich großen Öffnungen 151, 152 bereitgestellt werden können. So sind z.B. die Öffnungen 151 des ersten Temperiermedium-führenden Elements größer (im Durchmesser) als die Öffnungen 152 des zweiten Temperiermedium-führenden Elements.

Ein Temperiermedium-führendes Element 150 ist derart (in dem Temperierbereich 120) angeordnet, dass sich die Mehrzahl von Rohren 110 durch die Mehrzahl von Öffnungen 151, 152 erstrecken, bzw. wobei jeweils ein Rohr 110 durch eine Öffnung 151, 152 geführt ist. Die Haupterstreckungsrichtung X, Y des Temperiermedium-führenden Elements 150 ist hierbei senkrecht zu der Haupterstreckungsrichtung Z der Mehrzahl von Rohren 110. Das Temperiermedium-führende Element 150 ist so ausgestaltet, dass jeweils zwischen einem Rohr 110 und dem Rand 153 der entsprechenden Öffnung 151, 152 ein Spalt 140 verbleibt. Durch das Verwenden von Temperiermedium-führenden Elementen 150 mit unterschiedlichem Öffnungsdurchmesser variiert auch die Spaltbreite entlang der Rohre 110 bzw. entlang der Reaktorachse A (siehe insbesondere die Detailansicht).

Die Mehrzahl an Temperiermedium-führenden Elementen 150 ist in diesem Beispiel als Stapel 155 ausgebildet. In einem Beispiel können die Temperiermedium-führenden Elemente 150 lose aufeinander gestapelt/geschoben werden. In einem anderen Beispiel können die Temperiermedium-führenden Elemente 150 auch aneinander befestigt werden. In Figur 1 erstreckt sich der Stapel 155 von Temperiermedium-führenden Elementen 150 über mehr als die Hälfte des Temperierbereichs 120 entlang der Reaktorachse A, insbesondere über etwa 75% (bezogen auf den Querschnitt oder das Volumen des Reaktors 100). Ebenso wie die einzelnen Temperiermedium-führenden Elemente 150 ist auch der gesamte Stapel 155 zylinderförmig ausgebildet. Ferner ist dargestellt (siehe auch die Detailansicht), dass die Temperiermedium-führenden Elemente 150 (bzw. der Stapel 155) an die Seitenwände 103 des Reaktors 100 (bzw. des Temperierbereichs 120) angrenzen bzw. mit diesen abschließen.

Der Spalt 140 (bzw. die Mehrzahl von Spalten 140 entlang der Reaktorachse A) ist hier aber nicht als Toleranzausgleich vorgesehen, sondern derart ausgestaltet, dass ein Temperiermedium-Strom in erwünschter Weise geführt bzw. gesteuert wird.

Mittels des Spalts 140 kann eine homogene Temperierung durch den Temperiermedium-Strom ermöglicht werden, insbesondere kann (durch die Vielzahl an Spalten 140) eine homogene Abkühlcharakteristik entlang der Reaktorachse A realisiert werden (in anderen Worten: entlang der Mehrzahl von Rohren). Der Spalt 140 ist insbesondere derart eingerichtet, dass die Fließgeschwindigkeit des Temperiermedium-Stroms variiert wird. Die Temperierung kann an unterschiedlichen Bereichen des Temperierbereichs 120 auch unterschiedlich erwünscht sein. Entsprechend können verschiedene Öffnungsdurchmesser und/oder unterschiedliche Anzahlen von Temperiermedium-führenden Elementen 150 lokal vorgesehen werden, um z.B. variierende Fließgeschwindigkeiten (entlang der Reaktorachse A) bereitzustellen.

**Figur 2** zeigt einen Rohrbündel-Reaktor 100 gemäß einem weiteren exemplarischen Ausführungsbeispiel der Erfindung. Der Aufbau dieses zweiten Reaktor-Ausführungsbeispiels ist jenem von Figur 1 relativ ähnlich. Es wird jedoch kein Stapel 155 von Temperiermedium-führenden Elementen 150 vorgesehen, sondern ein einstückiger Temperiermedium-führendes Element Block 156. Dieser nimmt im Beispiel von Figur 2 fast den gesamten Temperierbereich 120 ein.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

### Bezugszeichen

- 100: Rohrbündel-Reaktor
- 101: Einlass
- 102: Auslass
- 103: Seitenwand
- 110: Rohr, Rohrbündel
- 120: Temperierbereich
- 121: Temperiermedium Einlass
- 122: Temperiermedium Auslass
- 140: Spalt
- 150: Temperiermedium-führendes Element, Lochplatten-Inlay
- 151: Temperiermedium-führendes Element, erster Öffnungsdurchmesser
- 152: Temperiermedium-führendes Element, zweiter Öffnungsdurchmesser
- 153: Öffnungsrand
- 155: Temperiermedium-führendes Element Stapel
- 156: Temperiermedium-führendes Element Block

## Patentansprüche

1. Ein Reaktor (100), insbesondere ein Rohrbündel-Reaktor (100), aufweisend:
eine Mehrzahl von Rohren (110), die eingerichtet sind zum Durchführen einer chemischen Reaktion,
wobei die Mehrzahl von Rohren (110) zumindest teilweise in einem Temperierbereich (120) angeordnet sind;
den Temperierbereich (120), der eingerichtet ist von einem Temperiermedium durchströmt zu werden, und hierbei die Mehrzahl von Rohren (110) zu temperieren; und
ein Temperiermedium-führendes Element (150) das eine Mehrzahl von Öffnungen (151, 152) aufweist;
wobei das Temperiermedium-führende Element (150) derart angeordnet ist, dass sich die Mehrzahl von Rohren (110) durch die Mehrzahl von Öffnungen (151, 152) erstrecken,
wobei jeweils zwischen einem Rohr (110) und dem Rand (153) der entsprechenden Öffnung (151, 152) ein Spalt (140) verbleibt, und
wobei der Spalt (140) eingerichtet ist, einen Temperiermedium-Strom bezüglich des entsprechenden Rohrs (110) zu führen.

2. Der Reaktor (100) gemäß Anspruch 1,
wobei der Spalt (140) derart eingerichtet ist, dass der Temperiermedium-Strom eine homogene Temperierung, insbesondere homogene Kühlung, ermöglicht,
insbesondere eine homogene Temperier-Charakteristik entlang des entsprechenden Rohrs (110) ermöglicht.

3. Der Reaktor (100) gemäß Anspruch 1 oder 2,
wobei der Spalt (140) eingerichtet ist, die Strömungsgeschwindigkeit des Temperiermedium-Stroms zu steuern.

4. Der Reaktor (100) gemäß einem der vorherigen Ansprüche,
wobei die Haupterstreckungsrichtung (X, Y) des Temperiermedium-führenden Elements (150) senkrecht zu der Haupterstreckungsrichtung (Z) der Mehrzahl von Rohren (110) angeordnet ist.

5. Der Reaktor (100) gemäß einem der vorherigen Ansprüche,
wobei der Reaktor (100), insbesondere der Temperierbereich (120), eine Seitenwand (103) aufweist, insbesondere parallel zu der Reaktorachse (A), und
wobei sich das Temperiermedium-führende Element (150) bis zu der Seitenwand (103) erstreckt, insbesondere an der Seitenwand (103) abschließt.

6. Der Reaktor (100) gemäß einem der vorherigen Ansprüche,
wobei das Temperiermedium-führende Element (150) als Inlay ausgebildet ist, insbesondere separat von den Rohren (110) hergestellt ist.

7. Der Reaktor (100) gemäß einem der vorherigen Ansprüche, wobei das Temperiermedium-führende Element (150) zumindest eines der folgenden Merkmale aufweist:
wobei das Temperiermedium-führende Element (150) als Lochplatte ausgebildet ist, insbesondere als Lochplatten-Inlay;
wobei das Temperiermedium-führende Element (150) zylinderförmig ausgebildet ist, insbesondere als kreisförmige Platte;
wobei das Temperiermedium-führende Element (150) ein oder mehr Segmente aufweist;
wobei die Breite des Spalts (140) 0,5 mm oder mehr, insbesondere 1 mm oder mehr, weiter insbesondere 5 mm oder mehr, ist;
wobei das Temperiermedium-führende Element (150) einen Durchmesser von 200 mm oder mehr, insbesondere 1 m oder mehr, weiter insbesondere 2 m oder mehr, aufweist;
wobei das Temperiermedium-führende Element (150) eine Höhe von 2 mm oder mehr, insbesondere 10 mm oder mehr, weiter insbesondere 50 mm oder mehr, aufweist;
wobei das Temperiermedium-führende Element (150) zumindest eines der folgenden Materialien aufweist: Metall, insbesondere zumindest eines von Stahl, Aluminium, eine Legierung, ein Buntmetall, Keramik, Kunststoff;
wobei der Durchmesser der Öffnung (151, 152) senkrecht zu der Haupterstreckungsrichtung des Temperiermedium-führenden Elements (150) variabel oder konstant ist;
wobei der Durchmesser der Öffnung (151, 152) senkrecht zu der Haupterstreckungsrichtung des Temperiermedium-führenden Elements (150) verjüngend, insbesondere konisch, ausgebildet ist.

8. Der Reaktor (100) gemäß einem der vorherigen Ansprüche, aufweisend:
ein weiteres Temperiermedium-führendes Element (150);
wobei das Temperiermedium-führende Element (150) und das weitere Temperiermedium-führende Element aneinander angrenzen, insbesondere aneinander befestigt sind, und/oder
wobei das Temperiermedium-führende Element (150) und das weitere Temperiermedium-führende Element parallel zueinander, insbesondere bezüglich der Haupterstreckungsrichtungen, angeordnet sind.

9. Der Reaktor (100) gemäß Anspruch 8,
wobei das Temperiermedium-führende Element (150) einen ersten Öffnungsdurchmesser (151) aufweist,
wobei das weitere Temperiermedium-führende Element einen zweiten Öffnungsdurchmesser (152) aufweist, und
wobei der erste Öffnungsdurchmesser (151) von dem zweiten Öffnungsdurchmesser (152) verschieden ist.

10. Der Reaktor (100) gemäß einem der vorherigen Ansprüche, aufweisend:
eine Mehrzahl an Temperiermedium-führenden Elementen, insbesondere aneinander befestigt, die als Stapel (155) ausgebildet ist; und/oder
einen einstückigen Temperiermedium-führendes Element Block (156).

11. Der Reaktor (100) gemäß einem der vorherigen Ansprüche,
wobei sich der Stapel (155) von Temperiermedium-führenden Elementen (150) oder der einstückige Temperiermedium-führendes Element Block (156) über ein Viertel oder mehr, insbesondere die Hälfte oder mehr, entlang der Reaktorachse (A) erstreckt.

12. Der Reaktor (100) gemäß einem der vorherigen Ansprüche,
wobei der Stapel von Temperiermedium-führenden Elementen (155) oder der einstückige Temperiermedium-führendes Element Block (156) zylinderförmig ausgebildet ist.

13. Der Reaktor (100) gemäß einem der vorherigen Ansprüche, aufweisend zumindest eines der folgenden Merkmale:
wobei die Rohre (110) parallel zueinander angeordnet sind;
wobei die Anzahl der Rohre (110) in dem Reaktor (100) in dem Bereich 3 bis 500 Rohre, weiter insbesondere in dem Bereich 5 bis 200 Rohre, ist;
wobei die Rohre (110) eingerichtet sind zum Durchführen einer katalytischen Reaktion, insbesondere Methanisierung;
wobei die Rohre (110) ausgebildet sind zum Aufnehmen eines Katalysators, insbesondere zum Durchführen einer heterogen-katalytischen Gas- und/oder Flüssigphasenreaktion;
wobei der Reaktor (100) eingerichtet ist zum Bereitstellen einer Temperatur von 250⁰C oder mehr, insbesondere 500⁰C oder mehr, weiter insbesondere 700⁰ C oder mehr;
wobei der Reaktor (100) eingerichtet ist zum Bereitstellen eines Drucks von 2 bar oder mehr, insbesondere 5 bar oder mehr, weiter insbesondere 10 bar oder mehr, weiter insbesondere 25 bar oder mehr;
wobei der Reaktor (100) eingerichtet ist, so dass das Reaktionsfluid den Reaktor (100) von unten nach oben oder von oben nach unten durchströmt;
wobei der Reaktor (100) eingerichtet ist, dass das Reaktionsfluid ein Kohlenstoff-haltiges Gas und/oder Wasserstoff aufweist;
wobei der Reaktor (100) eingerichtet ist, dass das Temperiermedium ein Öl, insbesondere Thermalöl, aufweist;
wobei der Reaktor (100) als Festbettreaktor ausgebildet ist;
wobei der Reaktor (100) und/oder die Mehrzahl von Rohren (110) Stahl, insbesondere Edelstahl, aufweist;
wobei der Reaktor entlang der Reaktorachse (A) eine Länge von 0,5 m oder mehr, insbesondere 5 m oder mehr, aufweist.

14. Ein Verfahren zum Betreiben eines Reaktors (100), insbesondere eines Rohrbündel-Reaktors, das Verfahren aufweisend:
Durchführen einer chemischen Reaktion in einer Mehrzahl von Rohren (110);
Strömen eines Temperiermediums durch einen Temperierbereich (120), wobei die Rohre (110) zumindest teilweise in dem Temperierbereich (120) angeordnet sind, und hierbei Temperieren der Rohre (110);
Einsetzen eines Temperiermedium-führenden Elements (150), das eine Mehrzahl von Öffnungen (151, 152) aufweist, so dass sich die Rohre (110) durch die Öffnungen (151, 152) erstrecken, wobei jeweils zwischen einem Rohr (110) und dem Rand (153) der entsprechenden Öffnung (151, 152) ein Spalt (140) verbleibt; und
Führen des Temperiermedium-Stroms mittels des Spalts (140) bezüglich dem entsprechenden Rohr (110), insbesondere Steuern der Fließgeschwindigkeit des Temperiermedium-Stroms.

15. Verwenden einer Lochplatte (150), um den Strom eines Temperiermediums in einem Rohrbündel-Reaktor (100) zu steuern, wobei sich die Rohre (110) des Reaktors (100) derart durch die Öffnungen (151, 152) der Lochplatte (150) erstrecken, dass jeweils ein Spalt (140) zwischen einem Rohr (110) und dem Rand (153) der entsprechenden Öffnung (151, 152) verbleibt.
